# EUROPÄISCHE PATENTSCHRIFT

(11) **EP 0 780 016 B1**
(45) Veröffentlichungstag und Bekanntmachung des Hinweises auf die Patenterteilung: **25.11.1998**
(21) Anmeldenummer: 95928967.9
(22) Anmeldetag: 19.08.1995
(51) Int. Cl.: G11B 17/22

(54) **PLATTENABSPIELGERÄT**
RECORD PLAYER
LECTEUR DE DISQUES

(30) Priorität: 08.09.1994 DE 4431917
(43) Veröffentlichungstag der Anmeldung: 25.06.1997
(73) Patentinhaber: NSM AKTIENGESELLSCHAFT, D-55411 Bingen (DE)
(72) Erfinder: MENKE, Wilhelm, D-55411 Bingen (DE); HEIDERSBERGER, Börge, D-55411 Bingen (DE)
(74) Vertreter: Becker, Bernd, Dipl.-Ing.
(86) Internationale Anmeldenummer: DE9501118
(87) Internationale Veröffentlichungsnummer: WO9608009

(56) Entgegenhaltungen:
- WO-A-93/08569
- WO-A-93/14499
- DE-A- 3 914 129
- US-A- 4 478 466
- US-A- 4 955 672

## Beschreibung

Die Erfindung bezieht sich auf ein Plattenabspielgerät mit mindestens einem auswechselbaren, in übereinanderliegenden AufnahmefächernPlatten enthaltenden Plattenmagazin, das schubachartig in ein Gehäuse des Plattenabspielgerätes eingesetzt und über eine manuelle betätigbare Verriegelungseinrichtung in seiner Position festgelgt ist.

Aus der EP 0 439 483 B1 ist beispielsweise ein CD-Plattenabspielgerät mit zwei einander gegenüberliegenden, auswechselbaren Plattenmagazinen bekannt, die mit in horizontalen Aufnahmefächerngelagerten, jeweils eine Platte aufnehmenden Plattenhaltern bestückt sind. Eine in Stapelrichtung der Plattenmagazine verfahrbare Transporteinrichtung befördert eine gewünschte Platte mit dem zugehörigen Plattenhalter zwischen dem Aufnahmefach des jeweiligen Plattenmagazins und einer Abspieleinheit hin und her. Bei derartigen Geräten ist es üblich, zu einem einzelnen Gerät mehrere Plattenmagazine zu besitzen und die einzelnen Plattenmagazine mit Platten aus einem bestimmten Musikgebiet, wie z.B. Klassik, Rock, Jazz usw. zu bestücken. Die nicht in das Plattenabspielgerät eingesetzten Plattenmagazine werden üblicherweise zum Schutz gegen Verstaubung in gesonderten Aufnahmeboxen abgestellt, denen jeweils ein Aufnahmebehälter für die Schutzhüllen der in dem Plattenmagazine abgelegten Platten zugeordnet ist.

Jedes Plattenmagazin des bekannten Abspielgerätes ist in seiner feststehenden Position über zwei an der Vorderseite des Gehäuses des Gerätes angehrachte Verriegelungen, die jeweils aus einem oben- und einem untenliegenden Schnappmechanismus bestehen, gehalten. Beide Verriegelungen sind über ein Gestänge mit einem gehäuseseitigen Verschiebehebel verbunden. Bei einer Bewegung des Verschiebehebels in der einen Richtung löst sich die erste Verriegelung, so daß das Plattenmagazin um eine Schwenkachse herum nach außerhalb des Gehäuses verschwenkt werden kann, um so das Auswechseln der in den Plattenhaltern gespeicherten Platten zu erleichtern. Bei einer Bewegung des Verschiebehebels in der anderen Richtung wird auch die zweite Verriegelung gelöst, wodurch das Plattenmagazin insgesamt aus dem Gehäuse entnommen werden kann. Hierbei muß sich jedoch sowohl beim Ausschwenken als auch bei der Herausnahme des Plattenmagazins die Transporteinrichtung in ihrer Endposition unterhalb der Ebene des Bodens des Plattenmagazins befinden, was also eine besondere Überwachungsfunktion der Lage der Transporteinrichtung beim Auswechseln des Plattenmagazins erfordert. Darüber hinaus bedingt die beim Auswechseln des Plattenmagazins notwendige Rotations- und Translationsbewegung desselben eine relativ aufwendige Konstruktion der beiden, jeweils aus zwei Schnappmechanismen bestehenden Verriegelungen.

Weiterhin zeigt die DE 39 31 715 Al ein Plattenabspielgerät mit einem auswechselbaren Plattenmagazin, das in übereinanderliegenden Aufnahmefächern gelagerte Platten enthält. Das schubfachartig in das Gehäuse des Plattenabspielgerätes eingesetzte Plattenmagazin ist über eine Verriegelungseinrichtung in dem Gehäuse in seiner Position festgelegt. Die Verriegelungseinrichtung umfaßt eine Arretieraussparung in der oberen Wand des Plattenmagazins, in die eine gehäuseseitige Andrückrolle des Plattenabspielgerätes nach dem Einführen des Plattenmagazins in das Plattenabspielgerät eingreift. Hierbei besteht jedoch die Gefahr, daß das Plattenmagazin bei einer Schräglage des Plattenabspielgerätes oder bei starken Erschütterungen des Plattenabspielgerätes aus dem Plattenabspielgerät herausgleitet.

Ferner offenbart die WO 93/14499 ein Plattenabspielgerät mit mindestens einem auswechselbaren, in übereinanderliegenden Aufnahmefächern Platten enthaltenden Plattenmagazin, das schubfachartig in ein Gehäuse des Plattenabspielgerätes eingesetzt und über eine Verriegelungseinrichtung in dem Gehäuse in seiner Position festgelegt ist. Hierbei umfaßt die an der Vorderwand des Plattenmagazins angebrachte Verriegelungseinrichtung zwei durch eine Druckfeder beaufschlagte, gegenläufig bewegbare Hebel, die mit zugehörigen gehäuseseitigen Öffnungen zusammenwirken, wobei jedem Hebel in der Vorderwand eine Aussparung zugeordnet ist, in der sich ein an dem hinter der Aussparung liegenden Hebel angeformter, manuelle betätigbarer Griffvorsprung befindet. Zwischen dem Plattenmagazin und dem Gehäuse ist mindestens eine Nut/Feder-Führung vorgesehen. Die an der Vorderwand des Plattenmagazins angebrachte Verriegelungseinrichtung ist zum einen von der Konstruktion her relativ aufwendig und behindert zum anderen das Handling des nicht in das Gerät eingesetzten Plattenmagazins, da die Hebel über das Gehäuse vorstehen.

Der Erfindung liegt die Aufgabe zugrunde, ein Plattenabspielgerät der eingangs genannten Art zu schaffen, bei dem die Verriegelungseinrichtung des Plattenmagazins äußerst einfach aufgebaut ist und einen schnellen Austausch des Plattenmagazins ermöglicht.

Diese Aufgabe wird erfindungsgemäß dadurch gelöst, daß die Verriegelungseinrichtung an einer der Rückwand des Plattenmagazins zugeordneten, gehäusefesten Wand angebracht ist und einen federbelasteten, über ein Hebelgestänge mit einem über die Außenkontur des Plattenmagazins vorstehenden Betätigungshebel verbundenen Schwenkhebel umfaßt, der nach dem vollständigen Einschieben des Plattenmagazins in das Gehäuse in mindestens ein an der Rückwand des Plattenmagazins angebrachtes Halteelement einrastet.

Durch diese Maßnahmen ergibt sich sowohl eine platzsparende Unterbringung der Verriegelungseinrichtung innerhalb des Gehäuses des Plattenabspielgerätes als auch eine vom Aufbau her einfache und leicht zu handhabende Verriegelungseinrichtung, die einen schnellen Austausch des Plattenmagazins gewährleistet. Hierbei ist das Plattenmagazin selbst lediglich mit einem der Verriegelungseinrichtung zugeordneten Haltelement versehen, das das Handling des Plattenmagazins nicht behindert. Nach dem vollständigen Einschieben des Plattenmagazins in das Gehäuse schnappt der Schwenkhebel aufgrund seiner Federbelastung selbsttätig in das Halteelement am Plattenmagazin ein und legt damit dieses in seiner Position fest. Zur Herausnahme des Plattenmagazins aus dem Gehäuse ist lediglich der Schwenkhebel entgegen der Federkraft zu bewegen, wodurch der Schwenkhebel das Halteelement freigibt und sonach das Plattenmagazin aus dem Gehäuse entnommen werden kann.

Um insbesondere das Einschieben des Plattenmagazins in das Gehäuse zu erleichtern, stützt sich nach einer vorteilhaften Ausgestaltung der Erfindung der Boden des Plattenmagazins auf einer völlig ebenen Tragfläche des Gehäuses ab. Da somit zwischen dem Boden des Plattenmagazins und dem Gehäuse keinerlei Führungselemente für diese beiden Bauteile vorhanden sind, ist es nicht erforderlich, das Plattenmagazin exakt ausgerichtet in das Gehäuse einzusetzen.

Nach einer vorteilhaften Weiterbildung der Erfindung ist der Schwenkhebel zweiarmig ausgebildet, und jedem Arm des Schwenkhebels ist ein Halteelement des Plattenmagazins zugeordnet, wobei jedes Halteelement mit einer parallel zur Rückwand des Plattenmagazins verlaufenden Aussparung versehen ist, in die der entsprechende Arm des Schwenkhebels spielfrei eingreift. Hierdurch wird das eingeschobene Plattenmagazin zuverlässig positioniert. Zweckmäßigerweise ist der zweiarmige Schwenkhebel an der Rückseite der gehäusefesten, mit entsprechenden Durchstecköffnungen für die Halteelemente des Plattenmagazins versehenen Wand befestigt.

Zur Erleichterung des Einschiebens der Halteelemente in die Durchstecköffnungen der gehäusefesten Wand ist nach einer Weiterbildung der Erfindung jedes Halteelement im vorderen Bereich im Querschnitt konisch zulaufend ausgebildet. Aus dem gleichen Grund ist jedes Halteelement bevorzugt außenseitig im vorderen Bereich mit einer Abschrägung versehen. Damit beim Einschubvorgang des Plattenmagazins der federbelastete Schwenkhebel aus seiner Grundstellung verschwenkt wird und um dann anschließend in die Aussparung des zugehörigen Halteelementes einschnappen zu können, ist nach einer Ausgestaltung des Erfindungsgegenstandes der Aussparung jedes Halteelementes eine Einführschräge für den entsprechenden Arm des Schwenkhebels zugeordnet. Selbstverständlich können an einem Halteelement auch zwei Einführschrägen für eine entsprechend rechtsseitige oder linksseitige Beaufschlagung des Schwenkhebels vorgesehen sein.

Bei einer bevorzugten Ausführung ist der Betätigungshebel schwenkbar ausgebildet und steht über die Vorderwand des Plattenmagazins vor. Alternativ hierzu ist es möglich, den Betätigungshebel schwenkbar auszubilden und über die Deckenwand des Plattenmagazins vorstehen zu lassen.

Für die Beaufschlagung des Schwenkhebels mittels Federkraft ist nach einer weiteren Ausgestaltung der Erfindung das Hebelgestänge derart mit einer Zugfeder verbunden, daß der Schwenkhebel stets eine Grundstellung einnimmt, die der Eingriffsposition mit den Halteelementen des Plattenmagazins entspricht und in der eine am Schwenkhebel angebrachte Nase an einem gehäuseseitigen Anschlag anliegt.

Weiterhin ist bevorzugt vorgesehen, daß an der Vorderseite der den Schwenkhebel tragenden Wand eine Feder befestigt ist, deren freies Ende unter Spannung der Feder an der Rückwand des eingeschobenen Plattenmagazins anliegt. Nach dem Lösen der Verriegelungseinrichtung sorgt die Feder für ein selbsttätiges Herausgleiten des Plattenmagazins aus der Einschubposition.

Bei zwei übereinander angeordneten Plattenmagazinen mit jeweils zugeordneter Verriegelungseinrichtung stützt sich zweckmäßigerweise das obere Plattenmagazin unmittelbar auf der als ebene Tragfläche dienenden Deckenwand des unteren Plattenmagazins ab. So ergibt sich eine geringere Bauhöhe des Gehäuses. Alternativ ist es auch möglich, bei zwei übereinander angeordneten Plattenmagazinen mit jeweils zugeordneter Verriegelungseinrichtung zwischen den Plattenmagazinen eine ebene Tragfläche für das obere Plattenmagazin vorzusehen. Hierbei kann die Tragfläche für das obere Plattenmagazin aus parallel nebeneinanderliegenden Stegen gebildet sein.

Zur leichten Handhabung des Plattenmagazins ist nach einer Weiterbildung der Erfindung die Vorderwand des Plattenmagazins mit einem Handgriff versehen. Zweckmäßigerweise ist der Handgriff als Griffleiste ausgebildet, die sich in der Mitte der Vorderwand des Plattenmagazins annähernd über die gesamte Höhe der Vorderwand erstreckt. Die Griffleiste erleichtert insbesondere die Einschub- und Herausziehbewegung des Plattenmagazins innerhalb des Gehäuses.

Zwecks Erleichterung des Transports des Plattenmagazins ist in vorteilhafter Ausgestaltung an der Vorderwand des Plattenmagazins ein klappbarer Tragbügel angelenkt. Zweckmäßigerweise ist dem klappbaren Tragbügel eine Schnappfeder derart zugeordnet, daß bei einer entsprechenden Bewegung des Tragbügels dieser selbsttätig in eine Ruheposition, in der der Tragbügel an der Vorderwand des Plattenmagazins anliegt, oder in eine Griffposition, in der der Tragbügel vertikal von der Vorderwand absteht, übergeht. Hierbei ist der Tragbügel bevorzugt mit Griffmulden und/oder Grifferhöhungen versehen. Ferner ist bevorzugt der Tragbügel U-förmig ausgebildet und erstreckt sich annähernd über die gesamte Höhe der Vorderwand des Plattenmagazins, wobei die Flansche des Tragbügels in der Mitte der Vorderwand angelenkt sind.

Bei einer vorteilhaften Ausführung der Erfindung sind an der Vorderwand des Plattenmagazins zwei gegenüberliegende, U-förmige Tragbügel angelenkt, die mit mindestens einer Schnappfeder und mit flanschseitigen Verzahnungen derart miteinander gekoppelt sind, daß bei einer Bewegung eines Tragbügels aus der Ruheposition in die Griffposition der andere Tragbügel zwangsweise ebenfalls in die Griffposition, in der beide Tragbügel aneinanderliegen, übergeht. Hierbei ist zweckmäßigerweise der Steg eines jeden Tragbügels im Querschnitt außenseitig nach innen gewölbt viertelkreisförmig zur Bildung eines innenseititen halbkreisförmigen Griffbereiches in der Griffposition der Tragbügel ausgebildet.

Bei einem Plattenabspielgerät, bei dem in den Aufnahmefächern des Plattenmagazins jeweils ein eine Platte aufnehmender Plattenhalter aufgelegt ist, der sich auf gegenüberliegenden, ortsfesten Gleitschienen abstützt und in seiner Lage durch zwei gegenüberliegende, ortsfeste Federelemente gesichert ist, setzt sich nach einer Ausgestaltung der Erfindung das Plattenmagazin als eine Baueinheit aus einem einstückigen Gehäusekörper mit darin eingeklipsten Gleitschienen und eingesetzten Federelementen zusammen, wobei die Federelemente durch die Gleitschienen in ihrer Position gehalten sind.

Zweckmäßigerweise besteht jedes Federelement aus einem U-förmigen Bügel, dessen Schenkel innenseitig an entsprechenden Vorsprüngen der Vorderwand bzw. der Rückwand des Plattenmagazins anliegen und dessen Steg mittig eine Sicke aufweist, die in einen an der entsprechenden Längsseite des Plattenhalters liegenden Einschnitt eingreift, wobei die jeweils auf einer Seite den Aufnahmefächern zugeordneten Federelemente zu einem durchgehenden Band zusammengefaßt sind. Ferner sind bevorzugt die jeweils auf einer Seite den Aufnahmefächern zugeordneten Gleitschienen zu einem durchgehenden Band zusammengefaßt, das über Klipsverbindungen an der Vorderwand bzw. der Rückwand des Plattenmagazins festgelegt ist. Zweckmäßigerweise ist jede Gleitschiene im Bereich des zugeordneten Federelementes mit einer Aussparung versehen, in die ein entsprechendes, an der Vorderwand bzw. der Rückwand des Plattenmagazins angeformtes Gleitschienen-Teilstück eingreift, das sich durch eine zugehörige Durchbrechung des Federelemente-Bandes erstreckt. Um ein Herausgleiten der obersten Platte aus dem Plattenmagazin bei einer Schräglage desselben zu verhindern, ist bevorzugt an der Innenseite der Deckenwand des Plattenmagazins ein als Schiene ausgebildeter Niederhalter für die Platte des Plattenhalters im obersten Aufnahmefach angeordnet.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwenbar sind, ohne den Rahmen der vorliegenden Erfindung zu verlassen.

Der der Erfindung zugrundeliegende Gedanke wird in der nachfolgenden Beschreibung anhand eines Ausführungsbeispieles, das in der Zeichnung dargestellt ist, näher erläutert. Es zeigt:

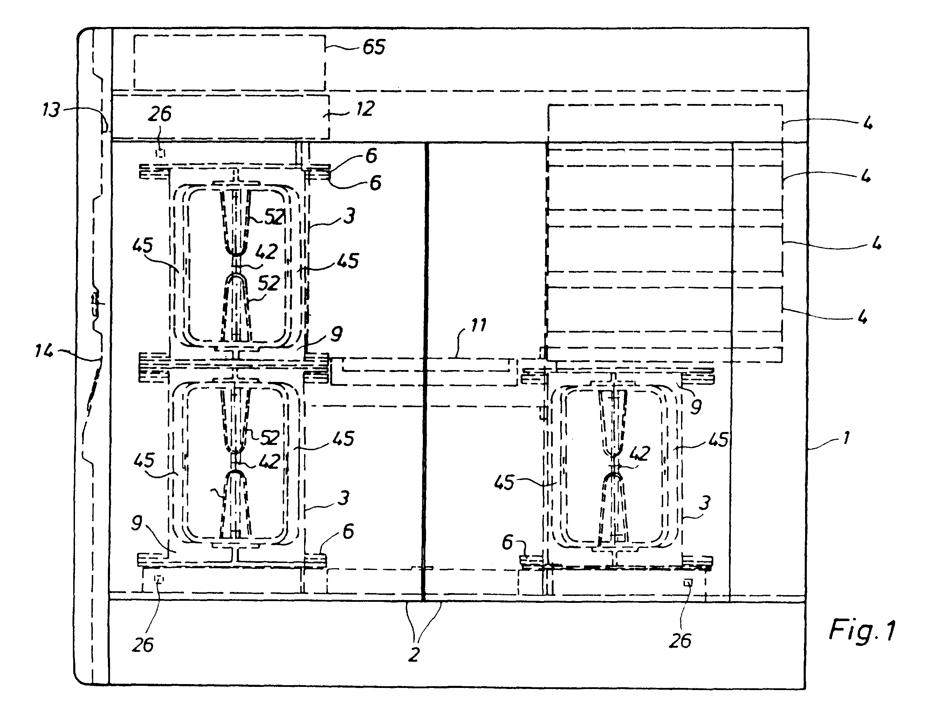

- Fig. 1: eine Vorderansicht eines Plattenabspielgerätes nach der Erfindung,

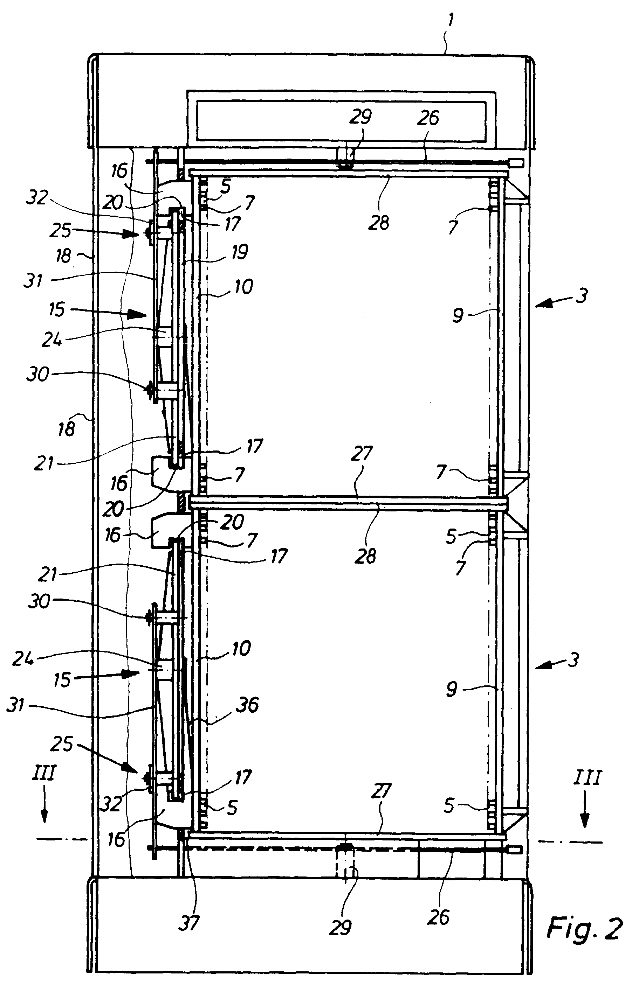

- Fig. 2: eine Seitenansicht des Gerätes nach Fig. 1 im vergrößerten Maßstab und teilweise im Schitt,

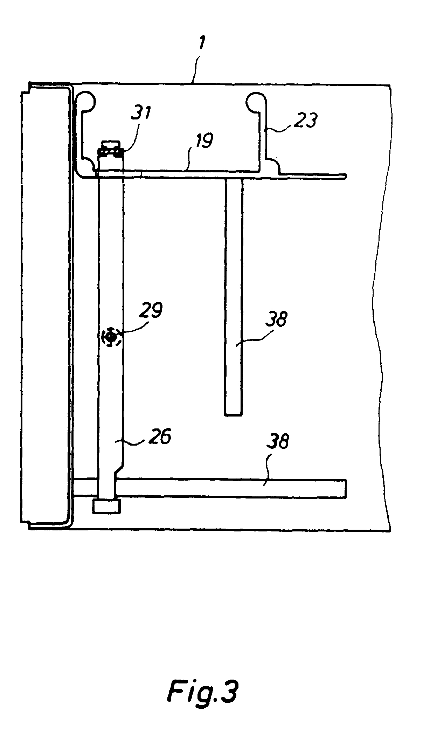

- Fig. 3: einen Schnitt durch die Darstellung nach Fig. 2 gemäß der Linie III-III,

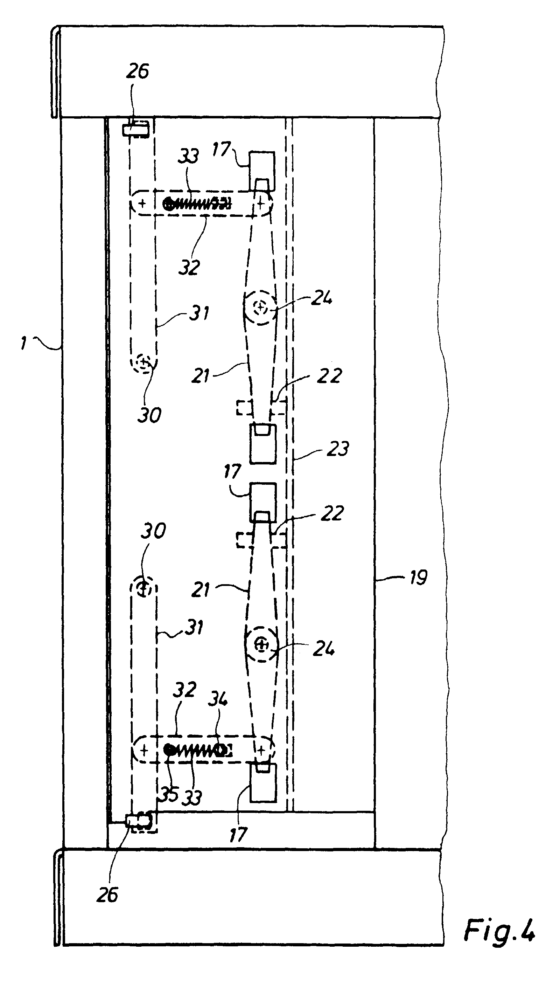

- Fig. 4: eine Teil-Vorderansicht auf die Darstellung nach Fig. 2, jedoch ohne eingesetzte Plattenmagazine,
- Fig. 5: eine alternative Ausführung der Darstellung nach Fig. 4,

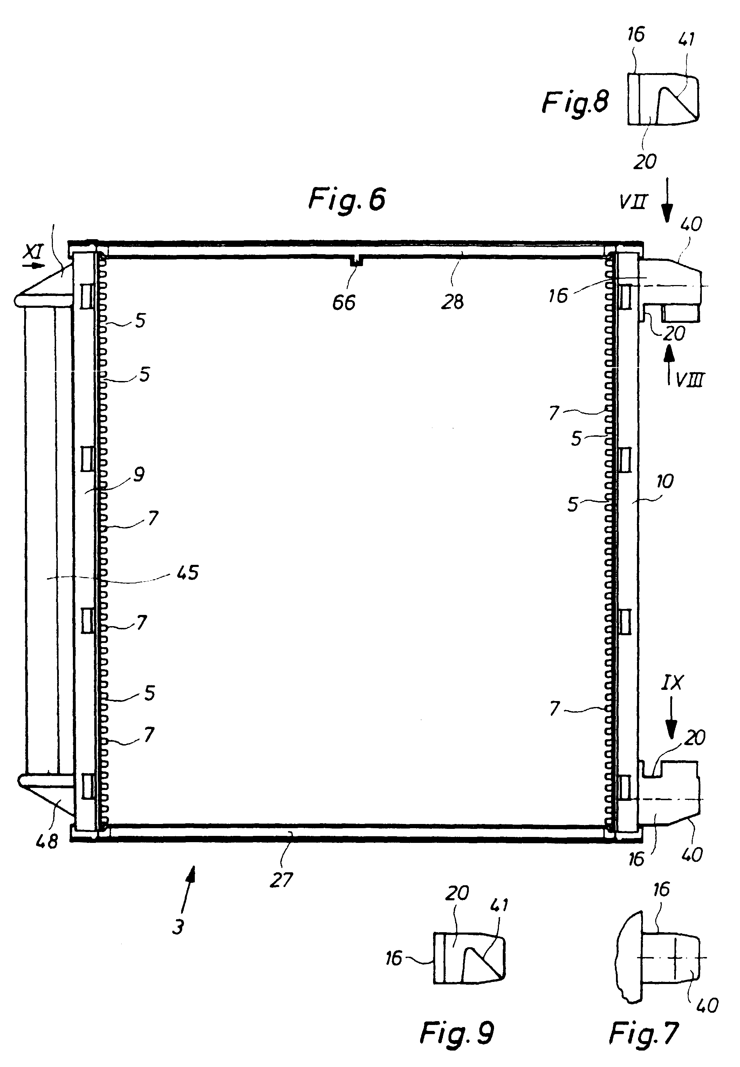

- Fig. 6: ine vergrößerte Darstellung eines der in das Plattenabspielgerät nach Fig. 1 eingesetzten Plattenmagazine,
- Fig. 7: eine Draufsicht auf das obere Halteelement des Plattenmagazins nach Fig. 6 in Richtung des Pfeiles VII,
- Fig. 8: eine Unteransicht auf das obere Halteelement des Plattenmagazins nach Fig. 6 in Richtung des Pfeiles VIII,
- Fig. 9: eine Draufsicht auf das untere Halteelement des Plattenmagazins nach Fig. 6 in Richtung des Pfeiles IX,

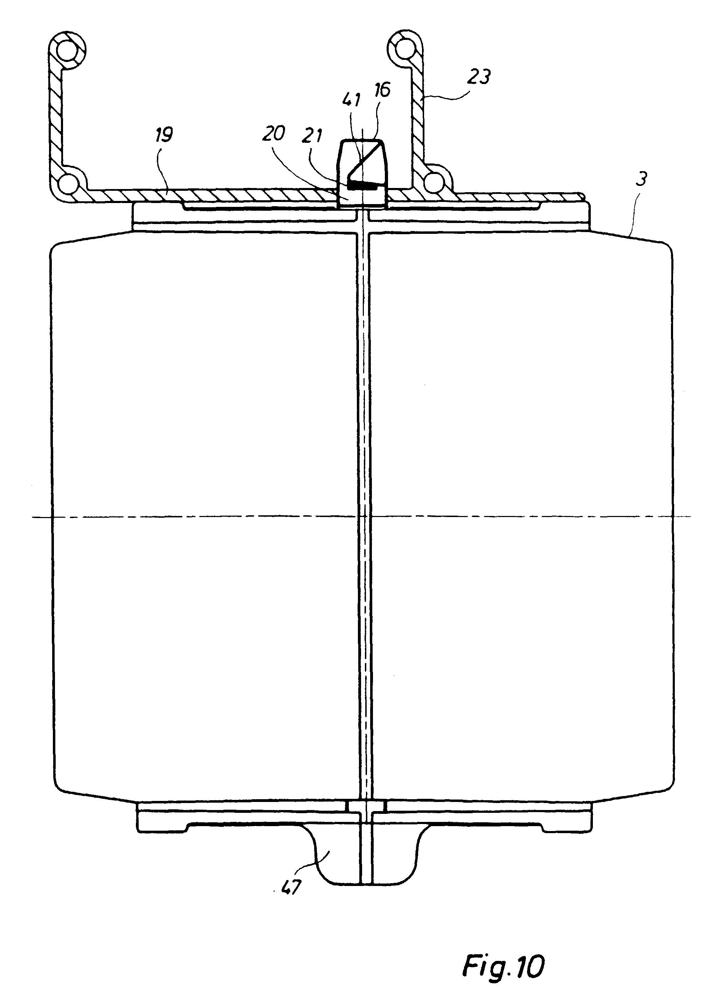

- Fig. 10: eine Draufsicht auf das Plattenmagazin nach Fig. 6, jedoch im in das Gehäuse des Plattenmagazins eingeschobenen Zustand und mit einem Teilschnitt im Bereich des unteren Halteelementes des Plattenmagazins, wobei die Tragbügel des Plattenmagazins weggelassen sind,

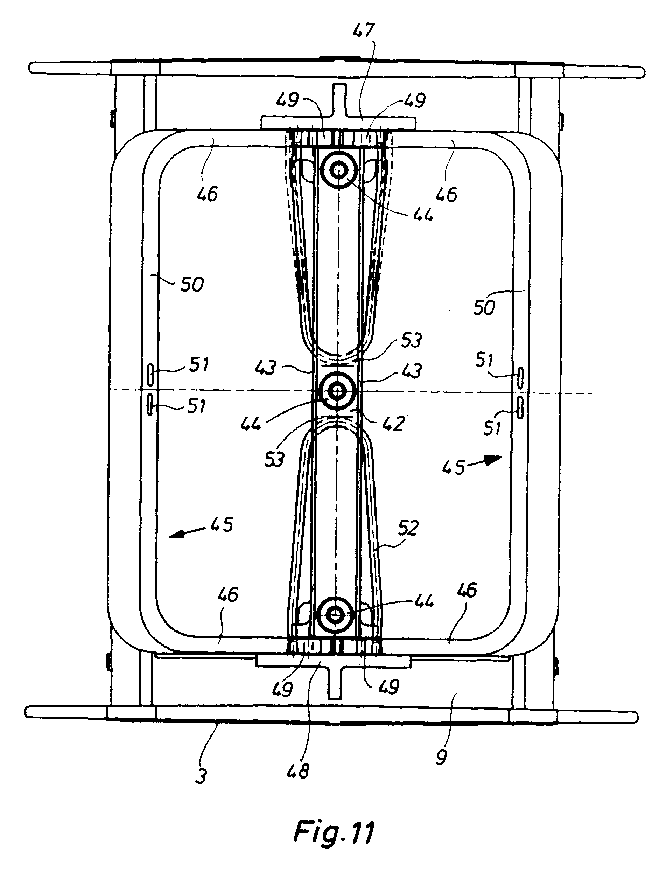

- Fig. 11: eine Ansicht auf das Plattenmagazin nach Fig. 6 in Richtung des Pfeiles XI,
- Fig. 12: eine Draufsicht auf den vorderen Bereich des Plattenmagazins nach Fig. 11 mit in Ruheposition befindlichen Tragbügeln,
- Fig. 13: die Darstellung nach Fig. 12 mit im Umschnappunkt befindlichen Tragbügeln,
- Fig. 14: die Darstellung nach Fig. 12 mit in Griffposition befindlichen Tragbügeln,
- Fig. 15: eine Teil-Seitenansicht des Plattenmagazins nach Fig. 11 mit in Griffposition befindlichen Tragbügeln,

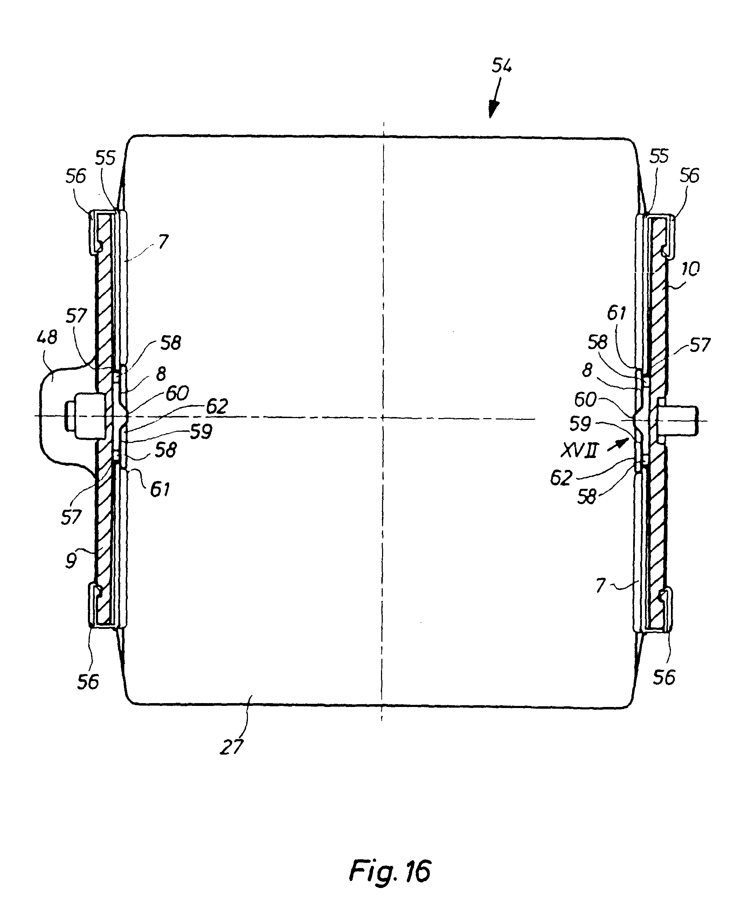

- Fig. 16: einen Querschnitt durch das Plattenmagazin nach Fig. 6 und
- Fig. 17: eine vergrößerte Darstellung der Einzelheit XVII nach Fig. 16, jedoch ohne eingesetzte Gleitschienen.

Das Plattenabspielgerät, das auch als Plattenaufzeichnungsgerät verwendbar ist, besitzt ein Gehäuse 1 mit einer an der Vorderseite angelenkten Doppel-Tür 2. Seitlich im unteren Bereich des Gehäuses 1 sind zwei gegenüberliegende, auswechselbare Plattenmagazine 3 angeordnet. Oberhalb des linken Plattenmagazins 3 befindet sich ein weiteres auswechselbares Plattenmagazin 3, während oberhalb des rechten Plattenmagazins 3 ein Turm aus vier auswechselbaren Laufwerken 4 vorgesehen ist. Die Laufwerke 4 dienen zum Auslesen oder Einschreiben von Informationen von einer bzw. auf eine Platte. Die untereinander identisch aufgebauten Plattenmagazine 3 weisen jeweils eine Vielzahl übereinanderliegend angeordneter Aufnahmefächer 5 für die Lagerung einer entsprechenden Anzahl an je eine Platte aufnehmender Plattenhalter 6 auf. Jedem Aufnahmefach 5 sind zwei gegenüberliegende Gleitschienen 7 zugeordnet, auf denen der Plattenhalter 6 mit randseitigen Schultern aufliegt. In dem Aufnahmefach 5 ist der Plattenhalter 6 durch zwei gegenüberliegende, am Plattenmagazin 3 angebrachte Federelemente 8 in seiner Lage gesichert. In dieser Lage steht der Plattenhalter 6 durch Freimachung der Vorderwand 9 und der Rückwand 10 des Plattenmagazins 3 soweit über der Auszugseite des Plattenmagazins 3 vor, daß er von einer Auszugeinrichtung einer in dem Raum zwischen den Plattenmagazinen 3 und den Laufwerken 4 auf- und abverfahrbaren Transporteinrichtung 11 für den eine Platte aufnehmenden Plattenhalter 6 erfaßt werden kann. oberhalb der beiden linken Plattenmagazine 3 befindet sich ein Platten-Lade-/Ausgabe-Schubfach 12, dem seitlich ein Ein-Ausgabeschacht 13 für einen Plattenhalter 6 mit einer Platte zugeordnet ist, und daß ebenfalls von der Transporteinrichtung 11 bedienbar ist. Sämtliche Funktionen des Gerätes werden über eine oberhalb des Platten-Lade-/Ausgabe-Schubfaches 12 angeordnete interne Rechnereinheit 65 gesteuert, die mit einem seitlich am Gehäuse 1 angebrachten Bedienpult 14 verbunden ist.

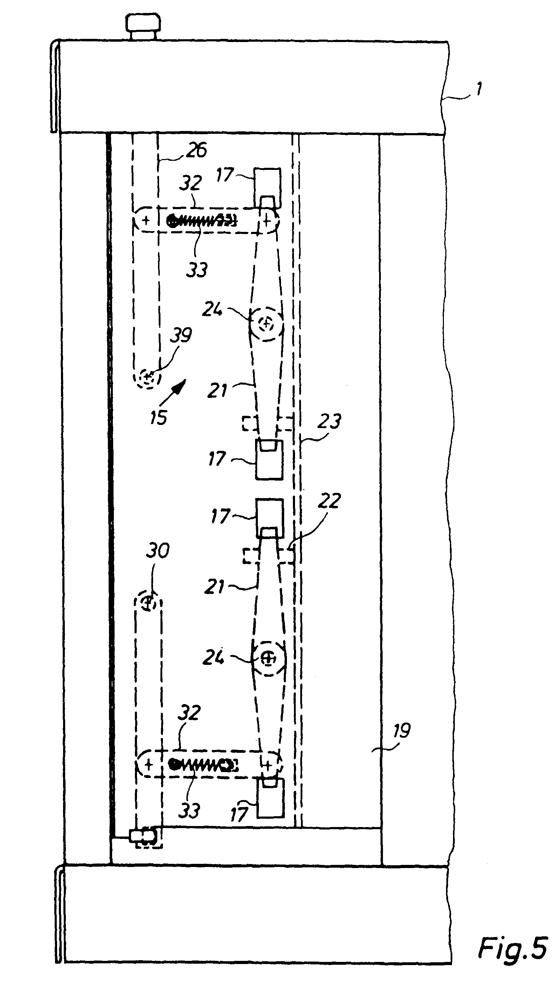

Jedem schubfachartig in das Gehäuse 1 eingesetzten Plattenmagazin 3 ist eine Verriegelungseinrichtung 15 zugeordnet, die mit zwei an der Rückwand 10 des Plattenmagazins 3 befestigten Halteelementen 16 zusammenwirkt. Die in der Vertikalen gegenüberliegen Halteelemente 16 erstrecken sich durch entsprechende Durchstecköffnungen 17 einer parallel zur Rückwand 18 des Gehäuses 1 verlaufenden gehäusefesten Wand 19. An den einander zugewandten Seiten weisen die Halteelemente 16 jeweils eine durchgehende, parallel zur Rückwand 10 des Plattengehäuses 3 verlaufende Aussparung 20 auf, in die der entsprechende Arm eines zweiarmigen Schwenkhebels 21 der Verriegelungseinrichtung 15 eingreift. Hierbei liegt eine an dem Schwenkhebel 21 angebrachte Nase 22 an einem als Abwinklung von der Wand 19 ausgebildeten Anschlag 23 an. Der sich in einem an der Wand 19 befestigten Lager 24 abstützende Schwenkhebel 21 ist über ein Hebelgestänge 25 mit einem Betätigungshebel 26 verbunden, dessen freies Ende über die Vorderwand 9 des Plattenmagazins 3 vorsteht, wobei der Betätigungshebel 26 der einen Verriegelungseinrichtung 15 parallel unterhalb des Bodens 27 des unteren Plattenmagazins 3 und der Betätigungshebel 26 der anderen Verriegelungseinrichtung 15 parallel oberhalb der Deckenwand 28 des oberen Plattenmagazins 3 verläuft. Der in einem gehäuseseitigen Lager 29 gehalterte Betätigungshebel 26 ist endseitig mit einem parallel zu der Wand 19 verlaufenden und an dieser über ein Lager 30 angelenkten Hebel 31 des Hebelgestänges 25 gekoppelt. Ein weiterer Hebel 32 ist jeweils gelenkig mit dem Hebel 31 und dem Schwenkhebel 21 verbunden. Eine in Längsrichtung des Horizontal verlaufenden Hebels 32 angeordnete Feder 33 ist einerseits an einem Vorsprung 34 des Hebels 32 und andererseits an einem gehäuseseitigen Zapfen 35 angeschlossen. Über die als Zugfeder ausgebildete Feder 33 wird der Schwenkhebel 21 stets in seiner Grundposition gehalten, in der die freien Enden seiner Arme hinter den Durchstecköffnungen 17 in der Wand 19 liegen, d.h. die Grundposition des Schwenkhebels 21 ist gleichzeitig die Eingriffsposition des Schwenkhebels mit den Halteelementen 16 des Plattenmagazins 3. Bei der in Fig. 5 gezeigten alternativen Ausführungsform steht der Betätigungshebel 26 der dem oberen Plattenmagazin zugeordneten Verriegelungseinrichtung 15 über die Oberseite des Gehäuses 1 vor, wobei der in einem Lager 39 schwenkbeweglich gehalterte Betätigungshebel 26 unmittelbar über den federbelasteten Hebel 32 mit dem Schwenkhebel 21 gekoppelt ist.

Bei einer Schwenkbewegung des Betätigungshebels 26 entgegen der Kraft der Feder 33 bewegt sich mittels des Hebelgestänges 25 der Schwenkhebel 21 aus seiner Eingriffsposition und gibt damit die Halteelemente 16 frei, so daß das Plattenmagazin 3 aus dem Gehäuse 1 entnommen werden kann. Eine an der Vorderseite der Wand 19 angebrachte und als Blattfeder ausgebildete Feder 36 deren freies Ende im eingeschobenen Zustand des Plattenmagazins unter Federspannung an der Rückwand 10 des Plattenmagazins 3 anliegt, unterstützt die Herausnahme des Plattenmagazins, indem die Feder bei der Freigabe des Plattenmagazins 3 einen bestimmten selbsttätigen Vorschub des Plattenmagazins 3 bewirkt. Beim Einschieben des Plattenmagazins 3 in das Gehäuse 1 stützt sich der ebene Boden 27 des unteren Plattenmagazins 3 auf einer völlig ebenen, gehäuseseitigen Tragfläche 37 ab, die auf Tragschienen 38 gehaltert ist. Demgegenüber stützt sich das obere Plattenmagazin 3 mit seinem ebenen Boden 27 unmittelbar auf der ebenen Deckenwand 28 des unteren Plattenmagazins 3 ab. Zur Erleichterung des Einschiebens der Halteelemente 16 in die Durchstecköffnungen 17 der Wand 19 ist jedes Halteelement 16 einerseits im vorderen Bereich im Querschnitt konisch zulaufend ausgebildet und andererseits im vorderen Bereich außenseitig mit einer Abschrägung 40 versehen. Damit beim Durchschieben der Halteelemente 16 durch die Durchstecköffnungen 17 der Schwenkhebel 21 sich selbsttätig entgegen der Kraft der Feder 33 aus seiner Grundposition verschwenkt, ist der Aussparung 20 eines jeden Halteelementes 16 eine entsprechende Einführschräge 41 vorgelagert, d.h. während des Einschubvorganges des Plattenmagazins 3 gleitet der Schwenkhebel 21 solange an den Einführschrägen 41 entlang, bis er in die Aussparungen 20 der Halteelemente 16 einrastet und damit das Plattenmagazin 3 in seiner eingeschobenen Position verriegelt.

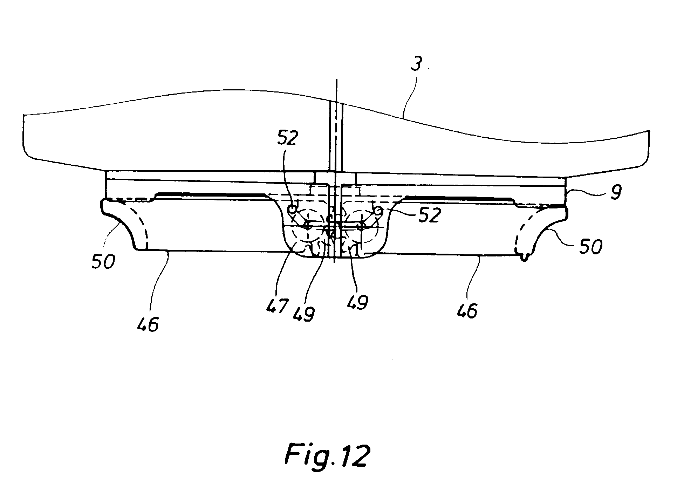

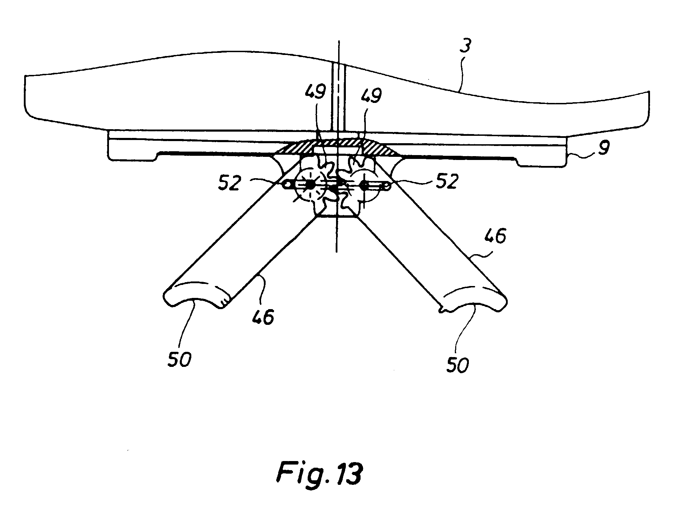

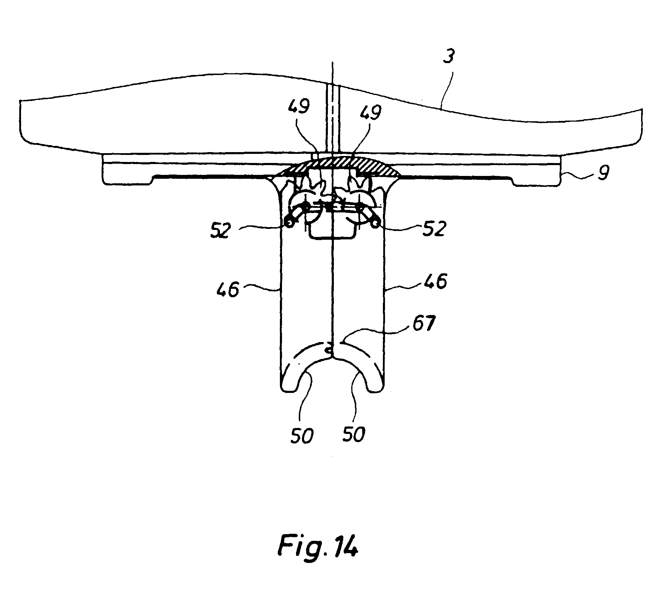

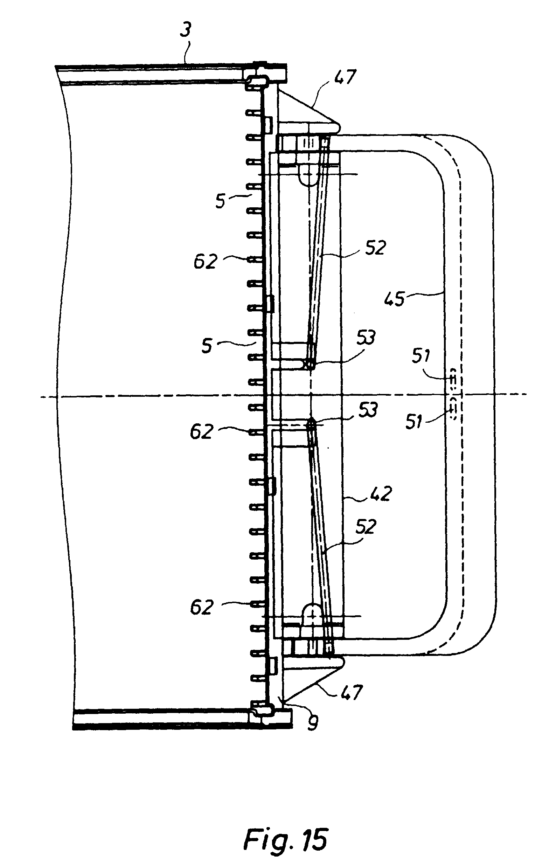

An der Außenseite der Vorderwand 9 des Plattenmagazins 3 befindet sich mittig eine sich annähernd über die gesamte Höhe der Vorderwand 9 erstreckende, als Handgriff dienende Griffleiste 42, die seitlich mit Griffmulden 43 versehen und in ihrer Lage durch drei im gleichen Abstand zueinander liegende Schraubverbindungen 44 gesichert ist. Des weiteren sind an der Vorderwand 9 zwei zueinander korrespondierende, klappbare Tragbügel 45 angeordnet. Die U-förmigen Tragbügel 45 sind mit ihren jeweils gegenüberliegenden Flanschen 46 in einem Lager 47 oberhalb der Griffleiste 42 und in einem Lager 48 unterhalb der Griffleiste 42 schwenkbeweglich gelagert, wobei jeweils die einander zugewandten Stirnseiten der Flansche 46 derart mit miteinander kämmenden Verzahnungen 49 versehen sind, daß bei einer Bewegung des einen Tragbügels 45 sich der andere Tragbügel 45 gleichzeitig mit verschwenkt. In der Ruheposition liegen die Tragbügel 45 an der Vorderwand 9 des Plattenmagazins 3 an und stehen mit ihren Stegen 50 zum leichten Ergreifen geringfügig über die Vorderwand 9 vor, während sie in der Griffposition, in der beide Tragbügel aneinanderliegen und durch an den Stegen 50 der Tragbügel 45 vorgesehene Nut-/Feder-Verbindungen 51 miteinander gekoppelt sind, vertikal von der Vorderwand 9 abstehen, wodurch beide Tragbügel 45 umgriffen werden können. Da der Steg 50 eines jeden Tragbügels im Querschnitt außenseitig nach innen gewölbt viertelkreisförmig ausgebildet ist, entsteht in der Griffposition der Tragbügel innenseitig ein halbkreisförmiger Griffbereich 67. Um ein selbsttätiges Übergehen der Tragbügel 45 in die Ruheposition oder in die Griffposition zu erreichen, sind den Tragbügeln 45 zwei gegenüberliegende bügelförmige Schnappfedern 52 zugeordnet, deren Basis durch einen entsprechenden Durchgang 53 in der Griffleiste 42 geführt ist und deren freie Enden in die einander zugewandten Flansche 46 der Tragbügel 45 eingreifen. In den Fig. 12 bis 15 sind verschiedene Stellungen der Tragbügel 45 zueinander dargestellt. Die freie Fläche der Vorderseite der Vorderwand 9 des Plattenmagazins 23 zwischen den Tragbügeln 45 in der Ruheposition dient als Beschriftungsfläche.

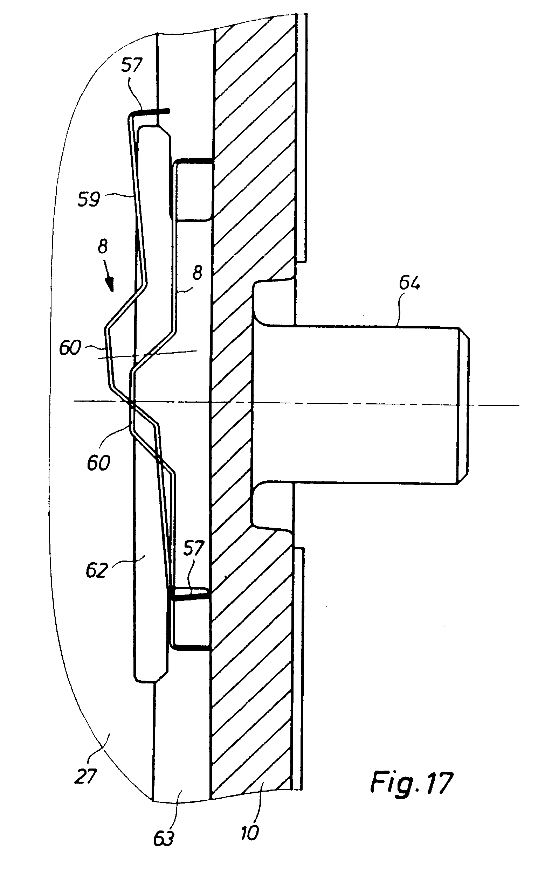

Das Plattenmagazin 3 umfaßt einen einstückigen Gehäusekörper 54 mit der Vorderwand 9, der Rückwand 10, dem Boden 27 und der Deckenwand 28. An der Innenseite der Deckenwand 28 befindet sich mittig ein Niederhalter 66 für die Platte des Plattenhalters 6 im obersten Aufnahmefach 5. Der als parallel zu den Gleitschienen 6 verlaufende Schiene ausgebildete Niederhalter ist mittig an der Deckenwand 28 angeordnet. In dem Gehäusekörper 54 sind die zu einem durchgehenden Band 55 zusammengefaßten Gleitschienen 7 mittels die Vorderwand 9 bzw. die Rückwand 10 umgreifender Klipsverbindungen 56 festgelegt, wobei die Federelemente 8 durch das Band 55 der Gleitschienen 7 in ihrer Lage gehalten sind. Jedes Federelement 8 besteht aus einem U-förmigen Bügel, dessen Schenkel 57 innenseitig an entsprechenden Vorsprüngen 58 der Vorderwand 9 bzw. der Rückwand 10 des Plattenmagazins anliegen und von dem Band 55 der Gleitschienen 7 beaufschlagt werden. Der Steg 59 des Federelementes 8 weist mittig eine Sicke 60 auf, die in einen an der entsprechenden Längsseite des Plattenhalters 6 liegenden Einschnitt eingreift. Die jeweils auf einer Seite den Aufnahmefächer 5 zugeordneten Federelemente sind zu einem durchgehenden Band zusammengefaßt. Im Bereich der Federelemente 8 ist jede zweite Gleitschiene 7 mit einer Aussparung 61 versehen, in die ein entsprechendes, an der Vorderwand 9 bzw. an der Rückwand 10 des Plattenmagazins angeformtes Gleitschienen-Teilstück 62 eingreift, das sich durch eine zugehörige Durchbrechung des Bandes der Federelemente 8 erstreckt. In Fig. 17 ist der Einbauvorgang des Federelementes 8 bzw. des Federelemente-Bandes im einzelnen dargestellt, wobei im Boden 27 eine Aufnahmenut 63 für das Band 55 der Gleitschienen 7 und ein Aufnahmezapfen 64 an der Rückwand 10 für das Halteelemente 16 zu erkennen ist.

## Patentansprüche

1. Plattenabspielgerät mit mindestens einem auswechselbaren, in übereinanderliegenden Aufnahmefächern (5) Platten enthaltenden Plattenmagazin (3), das schubfachartig in ein Gehäuse (1) des Plattenabspielgerätes eingesetzt und über eine manuell betätigbare Verriegelungseinrichtung (15) in seiner Position festgelegt ist, dadurch gekennzeichnet, daß die Verriegelungseinrichtung (15) an einer der Rückwand (10) des Plattenmagazins (3) zugeordneten, gehäusefesten Wand (19) angebracht ist und einen federbelasteten, über ein Hebelgestänge (25) mit einem über die Außenkontur des Plattenmagazins (3) vorstehenden Betätigungshebel (26) verbundenen Schwenkhebel (21) umfaßt, der nach dem vollständigen Einschieben des Plattenmagazins (3) in das Gehäuse (1) in mindestens ein an der Rückwand (10) des Plattenmagazins (3) angebrachtes Halteelement (16) einrastet.

2. Plattenabspielgerät nach Anspruch 1, dadurch gekennzeichnet, daß der Boden (27) des Plattenmagazins (3) sich auf einer völlig ebenen Tragfläche (37) des Gehäuses (1) abstützt.

3. Plattenabspielgerät nach Anspruch 1 oder 2, dadurch gekennzeichnet, daß der Schwenkhebel (21) zweiarmig ausgebildet ist, und jedem Arm des Schwenkhebels (21) ein Halteelement (16) des Plattenmagazins (3) zugeordnet ist, wobei jedes Halteelement (16) mit einer parallel zur Rückwand (10) des Plattenmagazins (3) verlaufenden Aussparung (20) versehen ist, in die der entsprechende Arm des Schwenkhebels (21) spielfrei eingreift.

4. Plattenabspielgerät nach einem der Ansprüche 1 bis 3, dadurch gekennzeichnet, daß der zweiarmige Schwenkhebel (21) an der Rückseite der gehäusefesten, mit entsprechenden Durchstecköffnungen (17) für die Halteelemente (16) des Plattenmagazins (3) versehenen Wand (19) befestigt ist.

5. Plattenabspielgerät nach einem der Ansprüche 1 bis 4, dadurch gekennzeichnet, daß jedes Halteelement (16) im vorderen Bereich im Querschnitt konisch zulaufend ausgebildet ist.

6. Plattenabspielgerät nach einem der Ansprüche 1 bis 5, dadurch gekennzeichnet, daß jedes Halteelement (16) außenseitig im vorderen Bereich mit einer Abschrägung (40) versehen ist.

7. Plattenabspielgerät nach einem der Ansprüche 1 bis 6, dadurch gekennzeichnet, daß der Aussparung (20) jedes Halteelementes (16) eine Einführschräge (41) für den entsprechenden Arm des Schwenkhebels (21) zugeordnet ist.

8. Plattenabspielgerät nach einem der Ansprüche 1 bis 7, dadurch gekennzeichnet, daß der Betätigungshebel (26) schwenkbar ausgebildet ist und über die Vorderwand (9) des Plattenmagazins (3) vorsteht.

9. Plattenabspielgerät nach einem der Ansprüche 1 bis 7, dadurch gekennzeichnet, daß der Betätigungshebel schwenkbar ausgebildet ist und über die Deckenwand (28) des Plattenmagazins (3) vorsteht.

10. Plattenabspielgerät nach einem der Ansprüche 1 bis 9, dadurch gekennzeichnet, daß das Hebelgestänge (25) derart mit einer Feder (33) verbunden ist, daß der Schwenkhebel (21) stets eine Grundposition einnimmt, die der Eingriffsposition mit den Halteelementen (16) des Plattenmagazins (3) entspricht und in der eine am Schwenkhebel (21) angebrachte Nase (22) an einem gehäuseseitigen Anschlag (23) anliegt.

11. Plattenabspielgerät nach einem der Ansprüche 1 bis 10, dadurch gekennzeichnet, daß an der Vorderseite der den Schwenkhebel (21) tragenden Wand (19) eine Feder (36) befestigt ist, deren freies Ende unter Spannung der Feder (36) an der Rückwand (10) des eingeschobenen Plattenmagazins (3) anliegt.

12. Plattenabspielgerät nach einem der Ansprüche 1 bis 11, dadurch gekennzeichnet, daß bei zwei übereinander angeordneten Plattenmagazinen (3) mit jeweils zugeordneter Verriegelungseinrichtung (15) das obere Plattenmagazin (3) sich unmittelbar auf der als ebene Tragfläche dienenden Deckenwand (28) des unteren Plattenmagazins (3) abstützt.

13. Plattenabspielgerät nach einem der Ansprüche 1 bis 11, dadurch gekennzeichnet, daß bei zwei übereinander angeordneten Plattenmagazinen (3) mit jeweils zugeordneter Verriegelungseinrichtung (15) zwischen den Plattenmagazinen (3) eine ebene Tragfläche für das obere Plattenmagazin (3) vorgesehen ist.

14. Plattenabspielgerät nach Anspruch 13, dadurch gekennzeichnet, daß die Tragfläche für das obere Plattenmagazin (3) aus parallel nebeneinanderliegenden Stegen gebildet ist.

15. Plattenabspielgerät nach einem der Ansprüche 1 bis 14, dadurch gekennzeichnet, daß die Vorderwand (9) des Plattenmagazins (3) mit einem Handgriff versehen ist.

16. Plattenabspielgerät nach Anspruch 15, dadurch gekennzeichnet, daß der Handgriff als Griffleiste (42) ausgebildet ist, die sich in der Mitte der Vorderwand (9) des Plattenmagazins (3) annähernd über die gesamte Höhe der Vorderwand (9) erstreckt.

17. Plattenabspielgerät nach einem der Ansprüche 1 bis 16, dadurch gekennzeichnet, daß an der Vorderwand (9) des Plattenmagazins (3) ein klappbarer Tragbügel (45) angelenkt ist.

18. Plattenabspielgerät nach Anspruch 17, dadurch gekennzeichnet, daß dem klappbaren Tragbügel (45) eine Schnappfeder (52) derart zugeordnet ist, daß bei einer entsprechenden Bewegung des Tragbügels (45) dieser selbsttätig in eine Ruheposition, in der der Tragbügel an der Vorderwand (9) des Plattenmagazins (3) anliegt, oder in eine Griffposition, in der der Tragbügel (45) vertikal von der Vorderwand (9) absteht, übergeht.

19. Plattenabspielgerät nach Anspruch 18, dadurch gekennzeichnet, daß der Tragbügel (45) mit Griffmulden und/oder Grifferhöhungen versehen ist.

20. Plattenabspielgerät nach einem der Ansprüche 1 bis 19, dadurch gekennzeichnet, daß der Tragbügel (45) U-förmig ausgebildet ist und sich annähernd über die gesamte Höhe der Vorderwand (9) des Plattenmagazins (3) erstreckt, wobei die Flansche (46) des Tragbügels in der Mitte der Vorderwand (9) angelenkt sind.

21. Plattenabspielgerät nach einem der Ansprüche 1 bis 20, dadurch gekennzeichnet, daß an der Vorderwand (9) des Plattenmagazins (3) zwei gegenüberliegende U-förmige Tragbügel (45) angelenkt sind, die mit mindestens einer Schnappfeder (52) und mit flanschseitigen Verzahnungen (49) derart miteinander gekoppelt sind, daß bei einer Bewegung eines Tragbügels (45) aus der Ruheposition in die Griffposition der andere Tragbügel (45) zwangsweise ebenfalls in die Griffposition, in der beide Tragbügel (45) aneinanderliegen, übergeht.

22. Plattenabspielgerät nach Anspruch 21, dadurch gekennzeichnet, daß der Steg (50) eines jeden Tragbügels (45) im Querschnitt außenseitig nach innengewölbt viertelkreisförmig zur Bildung eines innenseitigen halbkreisförmigen Griffbereiches (67) in der Griffposition der Tragbügel (45) ausgebildet ist.

23. Plattenabspielgerät nach einem der Ansprüche 1 bis 22, bei dem in den Aufnahmefächern (5) des Plattenmagazins (3) jeweils ein eine Platte aufnehmender Plattenhalter (6) abgelegt ist, der sich auf gegenüberliegenden, ortsfesten Gleitschienen (7) abstützt und in seiner Lage durch zwei gegenüberliegende, ortsfeste Federelemente (8) gesichert ist, dadurch gekennzeichnet, daß sich das Plattenmagazin (3) als eine Baueinheit aus einem einstückigen Gehäusekörper (54) mit darin eingeklipsten Gleitschienen (7) und eingesetzten Federelementen (8) zusammensetzt, wobei die Federelemente (8) durch die Gleitschienen (8) in ihrer Position gehalten sind.

24. Plattenabspielgerät nach Anspruch 23, dadurch gekennzeichnet, daß jedes Federelement (8) aus einem U-förmigen Bügel besteht, dessen Schenkel (57) innenseitig an entsprechenden Vorsprüngen (58) der Vorderwand (9) bzw. der Rückwand (10) des Plattenmagazins (3) anliegen und dessen Steg (59) mittig eine Sicke (60) aufweist, die in einen an der entsprechenden Längsseite des Plattenhalters (6) liegenden Einschnitt eingreift, wobei die jeweils auf einer Seite den Aufnahmefächern (5) zugeordneten Federelemente (8) zu einem durchgehenden Band zusammengefaßt sind.

25. Plattenabspielgerät nach einem der Ansprüche 23 oder 24, dadurch gekennzeichnet, daß die jeweils auf einer Seite den Aufnahmefächern (5) zugeordneten Gleitschienen (7) zu einem durchgehenden Band (55) zusammengefaßt sind, das über Klipsverbindungen (56) an der Vorderwand (9) bzw. der Rückwand (10) des Plattenmmagazins (3) festgelegt ist.

26. Plattenabspielgerät nach einem der Ansprüche 23 bis 25, dadurch gekennzeichnet, daß jede Gleitschiene (7) im Bereich des zugeordneten Federelementes (8) mit einer Aussparung (61) versehen ist, in die ein entsprechendes, an der Vorderwand (9) bzw. der Rückwand (10) des Plattenmagazins (3) angeformtes Gleitschienen-Teilstück (62) eingreift, das sich durch eine zugehörige Durchbrechung des Federelemente-Bandes erstreckt.

27. Plattenabspielgerät nach einem der Ansprüche 1 bis 27, dadurch gekennzeichnet, daß an der Innenseite der Deckenwand (28) des Plattenmagazins (3) ein als Schiene ausgebildeter Niederhalter (66) für die Platte des Plattenhalters (6) im obersten Aufnahmefach (5) angeordnet ist.

## Claims

1. Disc player, having at least one interchangeable disc magazine (3) containing discs in accommodation compartments (5) lying above one another, said magazine being inserted in a drawer-like manner into a housing (1) of the disc player and being secured in its position via a manually actuatable locking means (15), characterised in that the locking means (15) is mounted on a wall (19) fixed to the housing and associated with the rear wall (10) of the disc magazine (3) and includes a springloaded pivotal lever (21), which is connected via a lever linkage (25) to an actuating lever (26) protruding beyond the outer contour of the disc magazine (3), said pivotal lever locking in position in at least one retaining member (16) mounted on the rear wall (10) of the disc magazine (3) after the disc magazine (3) has been fully inserted into the housing (1).

2. Disc player according to claim 1, characterised in that the base (27) of the disc magazine (3) is supported on a completely flat supporting face (37) of the housing (1).

3. Disc player according to claim 1 or 2, characterised in that the pivotal lever (21) has a two-armed configuration, and each arm of the pivotal lever (21) is associated with a retaining member (16) of the disc magazine (3), each retaining member (16) being provided with a recess (20) extending parallel to the rear wall (10) of the disc magazine (3), in which recess the corresponding arm of the pivotal lever (21) engages in a clearance-free manner.

4. Disc player according to one of claims 1 to 3, characterised in that the two-armed pivotal lever (21) is secured on the rear side of the wall (19) fixed to the housing, said wall being provided with corresponding through-apertures (17) for the retaining members (16) of the disc magazine (3).

5. Disc player according to one of claims 1 to 4, characterised in that each retaining member (16) is configured in the front region to extend with a conical cross-section.

6. Disc player according to one of claims 1 to 5, characterised in that each retaining member (16) is provided with an incline (40) on the outside in the front region.

7. Disc player according to one of claims 1 to 6, characterised in that an inclined insert (41) is associated with the recess (20) of each retaining member (16) for the corresponding arm of the pivotal lever (21).

8. Disc player according to one of claims 1 to 7, characterised in that the actuating lever (26) is pivotably configured and projects beyond the front wall (9) of the disc magazine (3).

9. Disc player according to one of claims 1 to 7, characterised in that the actuating lever is pivotably configured and projects beyond the top wall (28) of the disc magazine (3).

10. Disc player according to one of claims 1 to 9, characterised in that the lever linkage (25) is so connected to a spring (33) that the pivotal lever (21) always assumes a basic position which corresponds to the engagement position with the retaining members (16) of the disc magazine (3), and in which basic position a projection member (22), mounted on the pivotal lever (21), abuts against a stop member (23) on the housing side/facing the housing.

11. Disc player according to one of claims 1 to 10, characterised in that a spring (36) is secured on the front side of the wall (19) carrying the pivotal lever (21), the free end of which spring abuts against the rear wall (10) of the inserted disc magazine (3) when the spring (36) is tensioned.

12. Disc player according to one of claims 1 to 11, characterised in that, when two disc magazines (3) are disposed above each other, each having an associated locking means (15), the upper disc magazine (3) is supported directly on the top wall (28) of the lower disc magazine (3), which top wall serves as the flat supporting face.

13. Disc player according to one of claims 1 to 11, characterised in that, when two disc magazines (3) are disposed above each other, each having an associated locking means (15), a flat supporting face for the upper disc magazine (3) is provided between the disc magazines (3).

14. Disc player according to claim 13, characterised in that the supporting face for the upper disc magazine (3) is formed from webs lying parallel to and adjacent one another.

15. Disc player according to one of claims 1 to 14, characterised in that the front wall (9) of the disc magazine (3) is provided with a handle.

16. Disc player according to claim 15, characterised in that the handle is configured as grip bar (42), which extends in the middle of the front wall (9) of the disc magazine (3) approximately over the entire height of the front wall (9).

17. Disc player according to one of claims 1 to 16, characterised in that a pivotable supporting clamp (45) is pivotally mounted on the front wall (9) of the disc magazine (3).

18. Disc player according to claim 17, characterised in that a snap spring (52) is associated with the pivotable supporting clamp (45) in such a manner that, with an appropriate movement of the supporting clamp (45), said clamp passes automatically into an inoperative position, in which the supporting clamp abuts against the front wall (9) of the disc magazine (3), or into a gripping position, in which the supporting clamp (45) protrudes vertically from the front wall (9).

19. Disc player according to claim 18, characterised in that the supporting clamp (45) is provided with depressed gripping portions and/or raised gripping portions.

20. Disc player according to one of claims 1 to 19, characterised in that the supporting clamp (45) has a U-shaped configuration and extends approximately over the entire height of the front wall (9) of the disc magazine (3), the flanges (46) of the supporting clamp being pivotally mounted in the centre of the front wall (9).

21. Disc player according to one of claims 1 to 20, characterised in that two oppositely situated U-shaped supporting clamps (45) are pivotally mounted on the front wall (9) of the disc magazine (3), said supporting clamps being interconnected with at least one snap spring (52) and with toothed portions (49) on the flange side in such a manner that, when one supporting clamp (45) moves from the inoperative position into the gripping position, the other supporting clamp (45) necessarily also passes into the gripping position, in which both supporting clamps (45) lie adjacent each other.

22. Disc player according to claim 21, characterised in that the web (50) of each supporting clamp (45) has an inwardly curved, quadrant-shaped cross-sectional configuration on the outside to form an internal semicircular gripping region (67) in the gripping position of the supporting clamps (45).

23. Disc player according to one of claims 1 to 22, wherein one disc holder (6), accommodating one disc, is deposited in each of the accommodation compartments (5) of the disc magazine (3), said disc holder being supported on oppositely situated fixed slide rails (7) and secured in its position by two oppositely situated fixed resilient members (8), characterised in that the disc magazine (3) is assembled as one structural unit from a one-piece housing body (54), having slide rails (7) clipped in position therein and resilient members (8) inserted therein, the resilient members (8) being retained in their position by the slide rails (7).

24. Disc player according to claim 23, characterised in that each resilient member (8) comprises a U-shaped clamp, the portions (57) of which abut against the insides of corresponding projections (58) of the front wall (9), or respectively of the rear wall (10) of the disc magazine (3), and the web (59) of which clamp has a bead (60) in the centre, which bead engages in an incision situated in the corresponding longitudinal side of the disc holder (6), the resilient members (8) respectively associated with each of the accommodation compartments (5) on one side being combined to form a continuous strip.

25. Disc player according to one of claims 23 or 24, characterised in that the slide rails (7) associated respectively with each of the accommodation compartments (5) on one side are combined to form a continuous strip (55), which is secured via clip connections (56) on the front wall (9) or respectively on the rear wall (10) of the disc magazine (3).

26. Disc player according to one of claims 23 to 25, characterised in that each slide rail (7) is provided with a recess (61) in the region of the associated resilient member (8), in which recess there engages a corresponding slide rail portion (62), formed on the front wall (9), or respectively on the rear wall (10) of the disc magazine (3), said slide rail portion extending through an associated opening in the resilient member strip.

27. Disc player according to one of claims 1 to 26, characterised in that, on the inside of the top wall (28) of the disc magazine (3), a hold-down member (66), configured as a rail, for holding-down the disc of the disc holder (6) is disposed in the uppermost accommodation compartment (5).

## Revendications

1. Lecteur de disques comportant au moins un magasin à disques (3) interchangeable, contenant des disques dans des cases de réception (5) superposées, lequel est inséré à la manière d'un tiroir dans un bâti (1) du lecteur de disques et est fixé dans sa position par l'intermédiaire d'un dispositif de verrouillage (15) actionnable manuellement, caractérisé en ce que le dispositif de verrouillage (15) est monté sur une paroi (19) solidaire du bâti, associée à la paroi arrière (10) du magasin à disques (3) et comprend un levier pivotant (21) sollicité par un ressort, relié, par l'intermédiaire d'une tringlerie à levier (25), à un levier d'actionnement (26) dépassant du contour extérieur du magasin à disques (3), lequel levier de pivotement s'encliquette dans au moins un élément de maintien (16), monté sur la paroi arrière (10) du magasin à disques (3), après introduction complète du magasin à disques (3) dans le bâti (1).

2. Lecteur de disques selon la revendication 1, caractérisé en ce que le fond (27) du magasin à disques (3) prend appui sur une surface portante (37) totalement plane du bâti (1).

3. Lecteur de disques selon la revendication 1 ou 2, caractérisé en ce que le levier pivotant (21) comporte deux bras, et à chaque bras du levier pivotant (21) est associé un élément de maintien (16) du magasin à disques (3), chaque élément de maintien (16) étant pourvu d'une découpe (20) parallèle à la paroi arrière (10 du magasin à disques (3), découpe dans laquelle le bras correspondant du levier pivotant (21) s'engage sans jeu.

4. Lecteur de disques selon l'une des revendications 1 à 3, caractérisé en ce que le levier pivotant (21) à deux bras est fixé sur la face arrière de la paroi (19) solidaire du bâti, pourvue d'ouvertures d'introduction (17) correspondantes pour les éléments de maintien (16) du magasin à disques (3).

5. Lecteur de disques selon l'une des revendications 1 à 4, caractérisé en ce que chaque élément de maintien (16) présente une section transversale conique dans la zone avant.

6. Lecteur de disques selon l'une des revendications 1 à 5, caractérisé en ce que chaque élément de maintien (16) est pourvu d'un chanfrein (40) sur le côté extérieur dans la zone avant.

7. Lecteur de disques selon l'une des revendications 1 à 6, caractérisé en ce qu'un biseau d'introduction (41) est associé à la découpe (20) de chaque élément de maintien (16), pour le bras correspondant du levier pivotant (21).

8. Lecteur de disques selon l'une des revendications 1 à 7, caractérisé en ce que le levier d'actionnement (26) est conformé de manière à pouvoir pivoter et dépasse de la paroi avant (9) du magasin à disques (3).

9. Lecteur de disques selon l'une des revendications 1 à 7, caractérisé en ce que le levier d'actionnement est conformé de manière à pouvoir pivoter et dépasse de la paroi de couverture (28) du magasin à disques (3).

10. Lecteur de disques selon l'une des revendications 1 à 9, caractérisé en ce que la tringlerie à levier (25) est relié à un ressort (33), de manière que le levier pivotant (21) prenne toujours une position de base, qui correspond à la position d'engagement avec les éléments de maintien (16) du magasin à disques (3) et dans laquelle un ergot (29), placé sur le levier pivotant (21), s'applique contre une butée (23) solidaire du bâti.

11. Lecteur de disques selon l'une des revendications 1 à 10, caractérisé en ce qu'à la face avant de la paroi (19), portant le levier pivotant (21), est fixé un ressort (36) dont l'extrémité libre s'applique, sous tension du ressort (36), contre la paroi arrière (10) du magasin à disques introduit (3).

12. Lecteur de disques selon l'une des revendications 1 à 11, caractérisé en ce que dans le cas de deux magasins à disques superposés (3) chacun avec un dispositif de verrouillage (15) associé, le magasin à disques supérieur (3) prend appui directement sur la paroi de couverture (28), servant de surface portante plane, du magasin à disques inférieur (3).

13. Lecteur de disques selon l'une des revendications 1 à 11, caractérisé en ce que dans le cas de deux magasins à disques superposés (3) chacun avec un dispositif de verrouillage associé (15), il est prévu une surface portante plane pour le magasin à disques supérieur (3), entre les magasins à disques (3).

14. Lecteur de disques selon la revendication 13, caractérisé en ce que la surface portante pour le magasin à disques supérieur (3) est formée par des traverses juxtaposées parallèlement.

15. Lecteur de disques selon l'une des revendications 1 à 14, caractérisé en ce que la paroi avant (9) du magasin à disques (3) est pourvue d'une poignée.

16. Lecteur de disques selon la revendication 15, caractérisé en ce que la poignée est conformée en baguette de préhension (42) qui s'étend au milieu de la paroi avant (9) du magasin à disques, approximativement sur toute la hauteur de la paroi avant (9).

17. Lecteur de disques selon l'une des revendications 1 à 16, caractérisé en ce que sur la paroi avant (9) du magasin à disques (3) s'articule un étrier porteur rabbatable (45).

18. Lecteur de disques selon la revendication 17, caractérisé en ce qu'à l'étrier porteur rabbatable (45) est associé un ressort à déclic (52), de manière qu'en cas de mouvement correspondant de l'étrier porteur (45), celui-ci passe automatiquement à une position de repos, à laquelle l'étrier porteur s'applique contre la paroi avant (9) du magasin à disques (3), ou à une position de préhension, à laquelle l'étrier porteur (45) saille verticalement de la paroi avant (9).

19. Lecteur de disques selon la revendication 18, caractérisé en ce que l'étrier porteur (45) est pourvu de gorges de préhension et/ou de reliefs de préhension.

20. Lecteur de disques selon l'une des revendications 1 à 19, caractérisé en ce que l'étrier porteur (45) est en forme de U et s'étend approximativement sur toute la hauteur de la paroi avant (9) du magasin à disques (3), les brides (46) de l'étrier porteur s'articulant au milieu de la paroi avant (9).

21. Lecteur de disques selon l'une des revendications 1 à 20, caractérisé en ce que sur la paroi avant (9) du magasin à disques (3) s'articulent deux étriers de portage (45) en U opposés l'un à l'autre, qui sont accouplés entre eux par au moins un ressort à déclic (52) et par des dentures (49) côté bride, de manière que lors d'un mouvement d'un étrier porteur (45), de la position de repos dans la position de préhension, l'autre étrier porteur (45) passe obligatoirement aussi à la position de préhension, à laquelle les deux étriers porteur (45) s'appliquent l'un contre l'autre.

22. Lecteur de disques selon la revendication 21, caractérisé en ce que l'âme (50) de chaque étrier porteur (45) présente une section transversale extérieurement en forme de quart ce cercle courbé vers l'intérieur, afin de former une zone de préhension (67) en forme de demi-cercle côté Intérieur, dans la position de préhension des étriers porteur (45).

23. Lecteur de disques selon l'une des revendications 1 à 22, dans lequel, dans chacune des cases de réception (5) du magasin à disques (3), est rangé un porte-disque (6) recevant un disque, qui prend appui sur des glissières (7) fixes, se faisant face, et qui est immobilisé dans sa position par deux éléments à ressort (8) fixes, se faisant face, caractérisé en ce que le magasin à disques (3) se compose, en tant qu'unité de construction, d'un corps de bâti (54) d'une seule pièce avec des glissières (7) clipsées à l'intérieur et éléments à ressort (8) insérés, les éléments à ressort (8) étant maintenus dans leur position par les glissières (8).

24. Lecteur de disques selon la revendication 23, caractérisé en ce que chaque élément à ressort (8) est constitué d'un étrier en U, dont les branches (57) s'appliquent intérieurement contre des saillies (58) correspondantes respectivement de la paroi avant (9) et de la paroi arrière (10) du magasin à disques (3) et dont l'âme (59) présente au milieu une moulure (60), qui s'engage dans une entaille située sur le côté longitudinal correspondant du porte-disque (6), les éléments à ressort (8), associés sur un côté aux cases de réception (5), étant réunis en une bande continue.

25. Lecteur de disques selon l'une des revendications 23 ou 24, caractérisé en ce que les glissières (7), associées sur un côté aux cases de réception (5), sont réunies en une bande (55) continue, qui est fixée respectivement sur la paroi avant (9) et la paroi arrière (10) du magasin à disques (3), par des assemblages clipsés (56).

26. Lecteur de disques selon l'une des revendications 23 à 25, caractérisé en ce que chaque glissière (7) est pourvue, dans la région de l'élément à ressort (8) associé, d'une découpe (61) dans laquelle s'engage une partie de glissière (62) correspondante, formée respectivement sur la face arrière (9) et la paroi arrière (10) du magasin à disques (3), laquelle pièce traverse un ajour correspondant de la bande d'éléments à ressort.

27. Lecteur de disques selon l'une des revendications 1 à 27, caractérisé en ce que sur la face intérieure de la paroi de couverture (28) du magasin à disques (3) est disposé un organe presseur (66), conformé en rail, pour le disque du porte-disque (6) dans la case de réception (5) la plus haute.
